Europäisches Patentamt

European Patent Office

Office européen des brevets

(19)

(11) Veröffentlichungsnummer : **0 131 192**
**B1**

(12) # EUROPÄISCHE PATENTSCHRIFT

(45) Veröffentlichungstag der Patentschrift :
10.09.86

(21) Anmeldenummer : 84107276.2

(22) Anmeldetag : 25.06.84

(51) Int. Cl.⁴ : **C 09 G   1/10**

(54) **Flüssiges Schuh- und Lederpflegemittel.**

(30) Priorität : 02.07.83 DE 3323939

(43) Veröffentlichungstag der Anmeldung :
16.01.85 Patentblatt 85/03

(45) Bekanntmachung des Hinweises auf die Patenterteilung : 10.09.86 Patentblatt 86/37

(84) Benannte Vertragsstaaten :
AT BE CH DE FR GB IT LI LU NL SE

(56) Entgegenhaltungen :
EP-A- 0 036 956
FR-A-   956 593
CHEMICAL ABSTRACTS, Band 82, 1975, Seite 97, Nr.
87881c, Columbus, Ohio, US;

(73) Patentinhaber : Henkel Kommanditgesellschaft auf
Aktien
Postfach 1100 Henkelstrasse 67
D-4000 Düsseldorf-Holthausen (DE)

(72) Erfinder : Soldanski, Hans-Dieter
Neckarstrasse 64
D-4300 Essen 18 (DE)
Erfinder : Holdt, Bernd-Dieter
Gutenbergstrasse 45
D-4000 Düsseldorf (DE)

EP 0 131 192 B1

## Beschreibung

Selbstglanzemulsionen für Fußböden sind seit vielen Jahren im Haushalt und im Objektbereich im Einsatz. Es hat nicht an Versuchen gefehlt, diese Produkte auch für andere Verwendungszwecke, z. B. zur Schuhbehandlung heranziehen.

Während es sich jedoch bei Fußbodenbelägen (Kunststoff, Holz oder Stein) um praktisch nicht verformbare, unelastische Materialien handelt, die auch beim Begehen kaum auf Verformungen beansprucht werden, stellt Leder ein verformbares, dehnfähiges, elastisches und biegefähiges Material dar, welches beim Tragen in Form des Schuhoberleders extrem auf diese lederspezifischen Eigenschaften beansprucht wird. Hierzu kommt, daß Pflegemittel für Schuhe in der Regel täglich, bzw. nach jedem Tragen, angewendet werden, während man Selbstglanzemulsionen für Fußböden im allgemeinen nur in Abständen von 1 bis 6 Monaten aufbringt. Diese Unterschiede zwischen Fußbodenbelägen und Leder machen leicht verständlich, daß die Anforderungen an ein Produkt für Fußböden und an ein Pflegemittel für Schuhe und Leder völlig anders sind. Die Versuche, für die Fußbodenbehandlung entwickelte Produkte auch zur Schuh- und Lederpflege einzusetzen, sind aus folgenden Gründen fehl geschlagen :

1. Fußboden-Selbstglanzemulsionen führen auf Leder durch die unzureichende Filmelastizität und Filmknickbruchbeständigkeit zum Brechen und Ablösen des Filmes vom Schuhoberleder.

2. Fußboden-Selbstglanzemulsionen ergeben bereits nach einigen Aufträgen starke Filmbildungen, wodurch es zu Beschichtungen des Schuhoberleders, Überdeckung der natürlichen Narbenstruktur des Leders, Verkrustungen und Verlust der Atmungsaktivität des Leders kommt.

3. Durch pH-Werte von 9 und mehr bewirken für Fußböden entwickelte Selbsglanzemulsionen ein Verspröden des Leders bzw. einen Lederangriff und Brüchigwerden.

4. Herkömmliche Selbstglanzemulsionen bewirken keine Lederpflege und -fettung und beeinträchtigen die Elastizität des Leders.

Dies bestätigt sich auch bei der Überprüfung von Produkten und Erfindungen auf dem Sektor der selbstglänzenden Fußbodenpflegemittel, z. B. gemäß DE-OS 1 769 467, FR-PS 2 332 312 und DD-PS 104 316 an verschiedenen Lederoberflächen.

Erst in jüngster Zeit gelang es, durch Kombination ausgewählter Mengen bestimmter Wirkstoffe auch solche Selbstglanzemulsionen zu entwickeln, die sich zur Schuh- und Lederpflege eignen (EP-OS 17 119, EP-OS 36 956). Sie zeichnen sich durch ihre Fähigkeit aus, elastische und verformbare Pflegemittelfilme zu bilden, die den extremen Verformungen und Knickungen während der Tragebeanspruchung widerstehen und die gleichzeitig dem Leder, ohne daß ein Nachpolieren erforderlich ist, einen hohen Glanz verleihen. Auf Grund der guten Gebrauchseigenschaften haben Produkte dieses Typs inzwischen einen festen Platz im Markt der Schuhpflegemittel gefunden, obwohl ihr Anwendungsbereich im wesentlichen auf glatte, stark gedeckte Leder beschränkt ist.

Diese Einschränkung ergibt sich insbesondere aus der Tatsache, daß bei Behandlung mit diesen Mitteln naturbelassene, seidenglänzende oder bewußt matt gehaltene Leder durch übergroßen Glanzaufbau leicht in ihrem Oberflächencharakter verändert werden und weiterhin aus der Beobachtung, daß helle, pastellfarbene und wenig oder nicht gedeckte Leder oft nachdunkeln oder verflecken, ein Nachteil, der nicht zuletzt auf dem beträchtlichen Gehalt an niedrig siedenden Lösungsmitteln in diesen Kompositionen zurückzuführen ist. Durch einfache Änderungen an den Rezepturen dieser Mittel, wie die Herabsetzung des Festkörpergehaltes und die Verminderung der Lösungsmittelanteile ließen sich die geschilderten Nachteile nicht beheben ; es traten im Gegenteil Verschlechterungen bei anderen Eigenschaften, wie der Knickbruchfestigkeit des Films auf.

Bei der Suche nach brauchbaren Lösungen für die geschilderten Probleme wurde nun gefunden, daß sich bestimmte wäßrige Dispersionen, die in einer ausgewählten Zusammensetzung im wesentlichen Wachse, Lanolin, Polyurethanharze als bestimmende Filmbildner, polymere Polycarbonsäuren als pH-Regulatoren und nichtionogene Emulgatoren enthalten und die frei von niedrigsiedenden organischen Lösungsmitteln sind, hervorragend für die Pflege empfindlicher, insbesondere naturbelassener und matter Leder eignen.

Gegenstand der Erfindung ist ein flüssiges Schuh- und Lederpflegemittel in Form einer wäßrigen Dispersion mit einem pH-Wert von 7-8, dadurch gekennzeichnet, daß der nichtwäßrige Anteil aus folgenden Komponenten besteht :

a) 15-45 Gew.-% Wachs aus der Gruppe Carnauba-, Candelilla- und Montansäureesterwachs und deren Mischungen,

b) 10-30 Gew.-% Lanolin,

c) 20-45 Gew.-% dispergierbares, filmbildenes aliphatisches Polyurethanharz,

d) 1-4 Gew.-% wasserlösliche polymere Polycarbonsäure,

e) 6-24 Gew.-% nichtionischer Emulgator,

f) 0-2 Gew.-% wasserlösliches Hydroxyalkylamin mit 2-12 C-Atomen,

g) 0-5 Gew.-% Parfümöl, Konservierungsmittel, Schauminhibitoren, Emulgierhilfsmittel und/oder Farbstoffe,

h) 0-25 Gew.-% flüssige Verlaufshilfsmittel,

2

wobei dieser nichtwäßrige Anteil zwischen 3 und 20 Gew.-% der Dispersion ausmacht. Vorzugsweise enthält das Mittel einen nichtwäßrigen Anteil von 4-12 Gew.-%.

Gegenüber den bekannten Selbstglanzschuhpflegemitteln zeichnet sich das Mittel der Erfindung dadurch aus, daß bei seiner Anwendung helle, pastellfarbene, wenig oder nicht gedeckte Leder nicht mehr nachdunkeln oder verflecken und naturbelassene, seidenglänzende oder matte Leder nicht durch übermäßigen Glanzaufbau verfälscht werden. Dies wird erreicht, ohne etwa auf Vorteile wie die Bildung griffester, elastischer und knickbeständiger Pflegemittelfilme, die Pflege des Leders durch Lanolin und den Wegfall des Nachpolierens verzichten zu müssen. Die Anwendung dieses Mittels ist aber nicht auf die Pflege der genannten wenig glänzenden Leder beschränkt, denn die von ihm erzeugten Filme beeinträchtigen in keiner Weise den Glanz der hochglänzend hergestellten Leder. Das neue Mittel besitzt damit eine universelle Anwendbarkeit für alle Lederarten.

Bei den in der beanspruchten Komposition enthaltenen Wachsen handelt es sich um natürliche Wachse, wie Candelillawachs oder Carnaubawachs, oder um chemisch modifizierte Montanwachse vom Typ der Montansäureesterwachse. Besonders gut eignen sich Montansäureesterwachse, die Säurezahlen zwischen 25 und 35, Verseifungszahlen zwischen 115 und 155 und einen Tropfpunkt zwischen 75 und 90 °C aufweisen. Von diesen werden vorzugsweise 20-30 Gew.-% bezogen auf den nichtwäßrigen Anteil des Mittels, verwendet.

Lanolin wird, obwohl es auch als Wachs bezeichnet werden kann, gesondert als Bestandteil aufgeführt, da es nicht nur zur Filmbildung beiträgt, sondern wesentlich die pflegenden Eigenschaften des Mittels bestimmt. Gereinigtes Lanolin, wie es für die erfindungsgemäßen Mittel verwendet wird, besitzt folgende mittlere Kennzahlen :

Tropfpunkt 36-42 °C
Verseifungszahl 88-102
Jodzahl 18-32
freies Cholesterin 1 %
gebundenes Cholesterin 16-18 %.

Vorzugsweise enthalten die Mittel 12-20 Gew.-% Lanolin, bezogen auf den nichtwäßrigen Anteil.

Von den zahlreichen bekannten Polyurethanharzen eignen sich für das beanspruchte Mittel die dispergierbaren, filmbildenden, aliphatischen Typen. Solche Polyurethanharze, die auch in geringem Maße vernetzt sein können, werden in einer oder mehreren aufeinander folgenden Additionsreaktionen aus aliphatischen Diisocyanaten und aliphatischen Diolen, gegebenenfalls auch kleineren Mengen aliphatischer Diamine, die als Kettenverlängerer dienen, hergestellt. Geeignete Diisocyanate sind beispielsweise Hexamethylendiisocyanat und 4,4'-Diisocyanatodicyclohexylmethan. Als Diole eignen sich insbesondere Hydroxylendgruppen aufweisende aliphatische Polyester, wie sie beispielsweise aus Adipinsäure und kurzkettigen aliphatischen Diolen mit 2-6 C-Atomen, oder Hydroxylendgruppen aufweisende Polyether, wie sie beispielsweise durch Polymerisation von Ethylenoxid, Propylenoxid oder Tetrahydrofuran erhalten werden. Niedermolekulare Diole, wie Ethylenglykol und 1,6-Hexandiol, werden im allgemeinen nur in geringen Mengen bei der Herstellung der Polyurethane direkt verwendet ; sie dienen dann ebenso, wie die aliphatischen Diamine, beispielsweise Ethylendiamin und Hexamethylendiamin, der Kettenverlängerung und Modifizierung bereits vorgefertigter Polyurethane, die noch Isocyanatgruppen aufweisen. Das Molverhältnis von Diisocyanat zur Summe der Additionspartner kann für die hier verwendbaren Polyurethanharze zwischen 1,0 und 0,8 liegen.

Die beschriebenen Polyurethanharze liefern in der beanspruchten Wirkstoffkombination elastische Filme, die schnell die erforderliche Griffestigkeit erreichen und auch extremen Belastungen während des Tragens standhalten, ohne daß weitere harzartige oder polymere Filmbildner, wie Polyacrylate oder Polyethylene erforderlich wären. Besonders günstige Eigenschaften besitzen solche Mittel, deren Polyurethanharze aus aliphatischen Diisocyanaten mit 8-38 C-Atomen und Hydroxylendgruppen aufweisenden aliphatischen Polyestern vom mittleren Molekulargewicht 500-5 000 oder aliphatischen, Hydroxylendgruppen aufweisenden Polyethern vom mittleren Molekulargewicht 200-6 000 hergestellt worden sind. Von diesen Polyurethanharzen werden vorzugsweise 25-40 Gew.-%, bezogen auf den nichtwäßrigen Anteil des Mittels, verwendet.

Geeignete Polyurethanharze sind im Handel erhältlich, so beispielsweise die bereits in dispergierter Form vorliegenden Produkte der Firma Polyvinyl Chemie, die unter der Bezeichnung NeORez® vertrieben werden :

(Siehe Tabelle Seite 4 f.)

| NeoRez(R) Typ | Feststoff- gehalt Gew.-% | Säure zahl | Dichte g/cm$^3$ | Wasser- gehalt Gew.-% | Verlaufshilfs- mittel Gew.-%/Typ |
|---|---|---|---|---|---|
| R 960 | 34 ± 1 | 30 | 1,05 | 48 | 17/MP[+] |
| R 962 | 34 ± 1 | 30 | 1,07 | 49 | 17/MP[+] |
| R 970 | 40 ± 1 | 16 | 1,03 | 60 | 0 |
| R 974 | 40 ± 1 | 13 | 1,03 | 56 | 4/MP[+] |

[+]MP = N-Methylpyrrolidon

Zur Regulierung des pH-Wertes, der im Mittel dieser Erfindung zwischen 7 und 8 liegen soll, werden kleine Mengen wasserlöslicher polymerer Polycarbonsäuren zugesetzt. Diese Verbindungen stabilisieren den pH-Wert gegen zufällige Schwankungen, so daß eine Verschiebung in Bereiche, die bei empfindlichen Ledern zum Nachdunkeln führen, vermieden wird, ohne die Eigenschaften des Films auf dem Leder zu beeinträchtigen. Geeignet sind die wasserlöslichen Homopolymerisate von Acrylsäure, Methacrylsäure und Maleinsäure, sowie die wasserlöslichen Copolymerisate dieser Monomeren miteinander und mit anderen polymerisationsfähigen Molekülen, wie Alkylvinylethern und Olefinen. Bevorzugt wird Polyacrylsäure mit einem mittleren Molekulargewicht zwischen 1 000 und 100 000 eingesetzt.

Als Emulgatoren werden nichtionische Verbindungen verwendet, die beispielsweise durch Umsetzung von Ethylenoxid mit langkettigen Alkoholen, Alkylphenolen oder Fettsäureamiden zugänglich sind. Bevorzugt werden die Umsetzungsprodukte aus 6-30 Mol Ethylenoxid und primären Alkoholen mit 12-18 C-Atomen oder Alkylphenolen mit 6-14 C-Atomen in der Alkylgruppe, von denen wiederum vorzugsweise 12-18 Gew.-%, bezogen auf den nichtwäßrigen Anteil des Mittels, eingesetzt werden. Der Zusatz von wasserlöslichen Hydroxyalkylaminen mit 2-12 C-Atomen, vorzugsweise Mono-, Di- oder Triethanolamin, unterstützt die Bildung der Dispersionen.

Ein weiteres wesentliches Merkmal des Mittels der Erfindung ist die Abwesenheit von leichtflüchtigen organischen Lösungsmitteln, wie Benzinen, Chlorkohlenwasserstoffen oder Terpenen und von alkoholischen Lösungsmitteln, die bei herkömmlichen Mitteln häufig zu einer Störung des Wasserhaushaltes im Leder und zu einer Versprödung des Leders geführt haben. Dagegen können gewisse hochsiedende organische Lösungsmittel, die üblicherweise als Verlaufshilfsmittel zur Verbesserung der Filmbildung verwendet werden, wie Tris(ethylhexyl)phosphat, Isophoron und, bevorzugt, N-Methylpyrrolidon, in Mengen bis 25 Gew.-%, bezogen auf den nichtwäßrigen Anteil, eingesetzt werden, ohne daß dadurch die pflegenden Eigenschaften gemindert werden.

Über die genannten wesentlichen Bestandteile hinaus können in kleinen Mengen, vorzugsweise 0,05- 5 Gew.-%, bezogen auf den nichtwäßrigen Anteil, weitere in Schuhpflegemitteln übliche Inhaltsstoffe enthalten sein, sofern sie mit den übrigen Bestandteilen verträglich sind. Zu diesen Inhaltsstoffen zählen beispielsweise Parfümöle, Konservierungsmittel, Schauminhibitoren und Farbstoffe, sowie Emulgierhilfsmittel, die z. B. als Begleitstoffe in vorkonfektionierten Rohstoffen enthalten sein können.

Die Herstellung der erfindungsgemäßen Mittel bietet keine Schwierigkeiten ; so kann man die Dispersionen ohne weiteres durch Einrühren der einzelnen Komponenten in geeigneter Reihenfolge in Wasser herstellen. Gewöhnlich werden jedoch zwei oder auch mehrere Komponenten, beispielsweise Lanolin, Wachs und der Emulgator, gegebenenfalls unter Erwärmen vorgemischt und dann gemeinsam mit den weiteren Komponenten vermengt. Als besonders vorteilhaft hat sich herausgestellt, eine oder mehrere Komponenten zunächst allein in eine gegebenenfalls höher konzentrierte Dispersion überzuführen und dieser die übrigen Komponenten zuzumischen. Dieser Weg bietet sich vor allem dann an, wenn auf käufliche Polyurethan-Dispersionen zurückgegriffen wird.

Beispiel

Es wurde eine wäßrige Dispersion der folgenden Zusammensetzung hergestellt :

| | |
|---|---|
| Montansäureesterwachs | 1,25 Gew.-% |
| Lanolin | 0,85 Gew.-% |
| Talgalkohol + 23 EO | 0,20 Gew.-% |
| Nonylphenol + 6 EO | 0,60 Gew.-% |

4

| | |
|---|---|
| Diethanolamin | 0,05 Gew.-% |
| aliphatisches Polyurethanharz | 1,70 Gew.-% |
| (Festkörper aus NeoRez 962) | |
| Katon | 0,002 Gew.-% |
| (Konservierungsmittel) | |
| Polyacrylsäure | 0,10 Gew.-% |
| Silikonentschäumer | 0,01 Gew.-% |
| Parfüm | 0,10 Gew.-% |
| N-Methylpyrrolidon | 0,85 Gew.- |
| Wasser | ad 100 Gew.-% |

Die Herstellung der Dispersion erfolgte in mehreren Schritten. Zunächst wurde durch Aufschmelzen von Montansäureesterwachs, Lanolin, Emulgatoren und Diethanolamin und durch Einrühren von Wasser eine ca. 20 %ige Wachsemulsion bereitet. Eine berechnete Menge dieser Emulsion wurde dann mit weiterem Wasser verdünnt, mit der vorverdünnten Polyacrylsäure, dem Konservierungsmittel, dem Parfüm und dem Entschäumer versetzt und zum Schluß unter gutem Rühren mit der Polyurethan-Dispersion NeoRez 962® (Polyvinyl Chemie) vermischt, die bereits das N-Methylpyrrolidon enthielt.

Die entstandene milchige, leichtflüssige Dispersion, deren nichtwäßriger Anteil 5,7 % betrug, wies einen pH-Wert von 7,8 auf. Sie eignete sich hervorragend zur Pflege matter und naturbelassener Leder, auf die sie mit einem Schwamm oder einem Tuch, vorteilhafterweise aber aus einem geeigneten Spender mit Schwammapplikator aufgetragen werden konnte.

**Patentansprüche**

1. Flüssiges Schuh- und Lederpflegemittel in Form einer wäßrigen Dispersion mit einem pH-Wert von 7-8, dadurch gekennzeichnet, daß der nichtwäßrige Anteil aus folgenden Komponenten besteht :
   a) 15-45 Gew.-% Wachs aus der Gruppe Carnauba-, Candelilla- und Montansäureesterwachs und deren Mischungen,
   b) 10-30 Gew.-% Lanolin,
   c) 20-45 Gew.-% dispergierbares, filmbildendes aliphatisches Polyurethanharz,
   d) 1-4 Gew.-% wasserlösliche polymere Polycarbonsäure,
   e) 6-24 Gew.-% nichtionischer Emulgator,
   f) 0-2 Gew.-% wasserlösliches Hydroxyalkylamin mit 2-12 C-Atomen,
   g) 0-5 Gew.-% Parfümöle, Konservierungsmittel, Schauminhibitoren, Emulgierhilfsmittel und/oder Farbstoffe,
   h) 0-25 Gew.-% flüssige Verlaufshilfsmittel,
   wobei dieser nichtwäßrige Anteil zwischen 3 und 20 Gew.-% der Dispersion ausmacht.

2. Mittel nach Anspruch 1, dadurch gekennzeichnet, daß der Gehalt an nichtwäßrigem Anteil 4-12 Gew.-% beträgt.

3. Mittel nach Ansprüchen 1 oder 2, dadurch gekennzeichnet, daß die Komponente a ein Montansäureesterwachs mit einem Tropfpunkt zwischen 75 und 90 °C, einer Säurezahl zwischen 25 und 30 und einer Verseifungszahl zwischen 115 und 155 ist.

4. Mittel nach Ansprüchen 1-3, dadurch gekennzeichnet, daß die Komponente c ein Polyurethanharz, hergestellt aus einem aliphatischen Diisocyanat mit 8-38 C-Atomen und einem aliphatischen, Hydroxylendgruppen aufweisenden Polyester vom mittleren Molekulargewicht 500-5 000 oder einem aliphatischen, Hydroxylendgruppen aufweisenden Polyether vom mittleren Molekulargewicht 200-6 000, ist.

5. Mittel nach Ansprüchen 1-4, dadurch gekennzeichnet, daß die Komponente d eine Polyacrylsäure mit einem mittleren Molekulargewicht von 1 000-100 000 ist.

6. Mittel nach Ansprüchen 1-5, dadurch gekennzeichnet, daß die Komponente e ein Additionsprodukt aus 6-30 Mol Ethylenoxid und primären Alkoholen mit 12-18 C-Atomen oder Alkylphenolen mit 6-14 C-Atomen in der Alkylkette oder ein Gemisch solcher Additionsprodukte ist.

7. Flüssiges Schuh- und Lederpflegemittel in Form einer wäßrigen Dispersion mit einem pH-Wert von 7-8, dadurch gekennzeichnet, daß der nichtwäßrige Anteil aus folgenden Komponenten besteht
   a) 20-30 Gew-.% Montansäureesterwachs mit einem Tropfpunkt zwischen 75 und 90 °C, einer Säurezahl zwischen 25 und 30 und einer Verseifungszahl zwischen 115 und 155,
   b) 12-20 Gew.-% Lanolin,
   c) 25-40 Gew.-% dispergierbares, filmbildendes aliphatisches Polyurethanharz, hergestellt aus einem aliphatischen Diisocyanat mit 8-38 C-Atomen und einem Hydroxylendgruppen aufweisenden aliphatischen Polyester vom mittleren Molekulargewicht 500-5 000 oder einem aliphatischen, Hydroxylendgruppen aufweisenden Polyether vom mittleren Molekulargewicht 200-6 000,
   d) 1-4 Gew.-% Polyacrylsäure mit einem mittleren Molekulargewicht zwischen 1 000 und 100 000,
   e) 12-18 Gew.-% Additionsprodukt aus 6-30 Mol Ethylenoxid und primären Alkoholen mit 12-18 C-Atomen oder Alkylphenolen mit 6-14 C-Atomen in der Alkylkette oder ein Gemisch solcher Additionsprodukte,

f) 0-2 Gew.-% Mono-, Di- oder Triethanolamin oder deren Mischungen,

g) 0,05-5 Gew.-% Parfümöle, Konservierungsmittel, Schauminhibitoren, Emulgierhilfsmittel und/oder Farbstoffe,

h) 0-25 Gew.-% N-Methylpyrrolidon,

wobei dieser nichtwäßrige Anteil 4-12 Gew.-% der Dispersion ausmacht.

**Claims**

1. A liquid shoe and leather care preparation in the form of an aqueous dispersion having a pH-value of from 7 to 8, characterized in that the non-aqueous part consists of the following components :

a) from 15 to 45 % by weight wax from the group comprising carnauba, candelilla and montanic acid ester wax and mixtures thereof,

b) from 10 to 30 % by weight lanolin,

c) from 20 to 45 % by weight dispersible, film-forming aliphatic polyurethane resin,

d) from 1 to 4 % by weight water-soluble polymeric polycarboxylic acid,

e) from 6 to 24 % by weight non-ionic emulsifier,

f) from 0 to 2 % by weight water-soluble hydroxyalkylamine containing from 2 to 12 C-atoms,

g) from 0 to 5 % by weight perfume oils, preservatives, foam inhibitors, emulsification aids and/or dyes,

h) from 0 to 25 % by weight liquid flow promoters, this non-aqueous part making up from 3 to 20 % by weight of the dispersion.

2. A preparation as claimed in Claim 1, characterized in that it contains from 4 to 12 % by weight of the non-aqueous part.

3. A preparation as claimed in Claim 1 or 2, characterized in that component e) is a montanic acid ester wax having a dropping point of from 75 to 90 °C, an acid number of from 25 to 30 and a saponification number of from 115 to 155.

4. A preparation as claimed in Claims 1 to 3, characterized in that component c) is a polyurethane resin prepared from an aliphatic diisocyanate containing from 8 to 38 C-atoms and an aliphatic polyester containing terminal hydroxyl groups and having an average molecular weight of from 500 to 5,000 or an aliphatic polyether containing terminal hydroxyl groups and having an average molecular weight of from 200 to 6,000.

5. A preparation as claimed in Claims 1 to 4, characterized in that component d) is a polyacrylic acid having an average molecular weight of from 1,000 to 100,000.

6. A preparation as claimed in Claims 1 to 5, characterized in that component e) is an addition product of from 6 to 30 moles ethylene oxide and primary alcohols containing from 12 to 18 C-atoms or alkylphenols containing from 6 to 14 C-atoms in the alkyl chain or a mixture of these addition products.

7. A liquid shoe and leather care preparation in the form of an aqueous dispersion having a pH-value of from 7 to 8, characterized in that the non-aqueous part consists of the following components :

a) from 20 to 30 % by weight montanic acid ester wax having a dropping point of from 75 to 90 °C, an acid number of from 25 to 30 and a saponification number of from 115 to 155,

b) from 12 to 20 % by weight lanolin,

c) from 25 to 40 % by weight dispersible, film-forming aliphatic polyurethane resin prepared from an aliphatic diisocyanate containing from 8 to 38 C-atoms and an aliphatic polyester containing terminal hydroxyl groups and having an average molecular weight of from 500 to 5,000 or an aliphatic polyether containing terminal hydroxyl groups and having an average molecular weight of from 200 to 6,000

d) from 1 to 4 % by weight polyacrylic acid having an average molecular weight of from 1,000 to 100,000,

e) from 12 to 18 % by weight of an addition product of from 6 to 30 moles ethylene oxide and primary alcohols containing from 12 to 18 C-atoms or alkylphenols containing from 6 to 14 C-atoms in the alkyl chain or a mixture of these addition products,

f) from 0 to 2 % by weight mono-, di- or triethanolamine or mixtures thereof,

g) from 0.05 to 5 % by weight perfume oils, preservatives, foam inhibitors, emulsification aids and/or dyes,

h) from 0 to 25 % by weight N-methyl pyrrolidone, this non-aqueous part making up from 4 to 12 % by weight of the dispersion.

**Revendications**

1. Produit liquide pour l'entretien des chaussures et du cuir, sous la forme d'une dispersion aqueuse dont le pH est de 7 à 8, caractérisé en ce que les composants autres que l'eau sont les suivants :

a) 15 à 45 % en poids de cires du groupe des carnauba, candelilla et esters de l'acide montanique et leurs mélanges,

b) 10 à 30 % en poids de lanoline,

c) 20 à 45 % en poids de résine de polyuréthane aliphatique, formatrice de films, dispersible,

d) 1 à 4 % en poids d'un acide polycarboxylique polymère soluble à l'eau,

e) 6 à 24 % en poids d'un émulsionnant non ionique,

f) 0 à 2 % en poids d'une hydroxyalcoylamine à 2 à 12 atomes de C,

g) 0 à 5 % en poids d'huile pour parfum, agents de conservation, inhibiteurs de mousse, agents émulsionnants auxiliaires et/ou colorants,

h) 0 à 25 % en poids d'un agent dilutif auxiliaire liquide, cette portion non-aqueuse représentant entre 3 et 20 % en poids de la dispersion.

2. Produit suivant la revendication 1, caractérisé en ce que la teneur en parties constituantes non aqueuses se monte à 4 à 12 % en poids.

3. Produit suivant les revendications 1 et 2, caractérisé en ce que le composant a est une cire d'ester de l'acide montanique dont le point de goutte se situe entre 75 et 90 °C, l'indice d'acide se situe entre 25 et 30 et l'indice de saponification entre 115 et 155.

4. Produit suivant les revendications 1 à 3, caractérisé en ce que le composant c est une résine de polyuréthane fabriquée à partir d'un diisocyanate aliphatique à 8 à 38 atomes de C et d'un polyester aliphatique comportant un groupe hydroxyle terminal, dont le poids moléculaire moyen est de 500 à 5 000, ou d'un polyéther aliphatique comportant un groupe hydroxyl therminal dont le poids moléculaire moyen est de 200 à 6 000.

5. Produit suivant les revendications 1 à 4, caractérisé en ce que le composant d est un acide polyacrylique dont le poids moléculaire moyen est de 1 000 à 100 000.

6. Produit suivant les revendications 1 à 5, caractérisé en ce que le composant e est un produit à 12 à 18 atomes de C, ou des alcoylphénols à 6 à 14 atomes de C dans la chaîne alcoyl, ou un mélange de tels produits d'addition.

7. Produit liquide pour l'entretien des chaussures et du cuir, ayant la forme d'une dispersion aqueuse dont le pH est de 7 à 8, caractérisé en ce que les composants autres que l'eau sont constitués de :

a) 20 à 30 % d'une cire d'ester de l'acide montanique ayant un point de goutte se situant entre 75 et 90 °C, un indice d'acide entre 25 et 30 et un indice de saponification entre 115 et 155,

b) 12 à 20 % en poids de lanoline,

c) 25 à 40 % en poids d'une résine de polyuréthane aliphatique, dispersible, formatrice de films, fabriquée à partir d'un diisocyanate aliphatique à 8 à 38 atomes de C et d'un polyester aliphatique comportant un groupe hydroxyle terminal, dont le poids moléculaire moyen est de 500 à 5 000 ou d'un polyéther aliphatique comportant un groupe hydroxyl terminal, dont le poids moléculaire moyen est de 200 à 6 000,

d) 1 à 4 % en poids d'un acide polyacrylique dont le poids moléculaire moyen se situe entre 1 000 et 100 000,

e) 12 à 18 % en poids d'un produit d'addition de 6 à 30 moles d'oxyde d'éthylène et d'alcools primaires à 12 à 18 atomes de C, ou des alcoylphénols à 6 à 14 atomes de C dans la chaîne alcoyl ou un mélange de tels produits d'addition,

f) 0 à 2 % en poids de mono-, di- ou triéthanolamine ou de leurs mélanges,

g) 0,05 à 5 % en poids d'essence de parfums, agents de conservation, inhibiteurs de mousse, agents émulsionnants auxiliaires et/ou colorants,

h) 0 à 25 % de N-méthylpyrrolidone, ces parties constituantes non aqueuses représentant 4 à 12 % en poids de la dispersion.